(19) Europäisches Patentamt
European Patent Office
Office européen des brevets

(11) EP 4 811 898 A1

(12) **EUROPEAN PATENT APPLICATION**
published in accordance with Art. 153(4) EPC

(43) Date of publication:
**23.09.2026 Bulletin 2026/39**

(21) Application number: **24916782.6**

(22) Date of filing: **30.12.2024**

(51) International Patent Classification (IPC):
***H04W 72/044*** *(2023.01)*

(52) Cooperative Patent Classification (CPC):
**H04W 72/044; H04W 72/0446; H04W 72/21; H04W 72/232; H04W 72/51; H04W 72/542**

(86) International application number:
**PCT/CN2024/143642**

(87) International publication number:
**WO 2025/148735 (17.07.2025 Gazette 2025/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.01.2024 CN 202410028950**

(71) Applicants:
- **CHINA MOBILE COMMUNICATION CO., LTD RESEARCH INSTITUTE**
  **Beijing 100053 (CN)**
- **CHINA MOBILE COMMUNICATIONS GROUP CO., LTD.**
  **Beijing 100032 (CN)**

(72) Inventors:
- **CAO, Yuhua**
  **Beijing 100032 (CN)**
- **ZHENG, Yi**
  **Beijing 100032 (CN)**
- **ZHANG, Jiazhen**
  **Beijing 100032 (CN)**
- **LIU, Yongchang**
  **Beijing 100032 (CN)**

(74) Representative: **Patentgruppen A/S**
**Aaboulevarden 31, 4th Floor**
**8000 Aarhus C (DK)**

# (54) INFORMATION TRANSMISSION METHOD, APPARATUS, DEVICE, AND STORAGE MEDIUM

(57) The present disclosure provides information transmission methods, information transmission apparatuses, information transmission devices, and storage media. The method includes: sending, by a terminal, first information to a network device, wherein the first information includes or associates with at least one of: a number of measurement resources; a periodicity of measurement resources; frequency domain resource(s) occupied by measurement resources; or, beam properties corresponding to measurement resources.

sending first information to a network device, wherein the first information comprises or associates with at least one of: a number of measurement resources; a periodicity of measurement resources; frequency domain resource(s) occupied by measurement resources; or, beam properties corresponding to measurement resources

501

**FIG. 5**

EP 4 811 898 A1

## Description

### CROSS-REFERENCE TO RELATED APPLICATION

This application claims a priority of the Chinese patent application No. 202410028950.9 filed on January 08, 2024, which is incorporated herein by reference in its entirety.

### TECHNICAL FIELD

The present disclosure relates to the field of communication technology, in particular to information transmission methods, information transmission apparatuses, information transmission devices, and storage media.

### BACKGROUND

Currently, in a scenario of terminal-side Artificial Intelligence (AI) model inference, even if a model of a terminal has a certain generalization capability, the inference performance of the terminal-side AI model is sufficiently good only under several specific beam patterns or several specific numbers of beams. If measurement resources configured by a base station for the terminal cannot adapt to the AI model of the terminal, the inference performance of the AI model will in turn be affected, thereby degrading the performance advantages of AI.

In addition, in a scenario of terminal-side AI model prediction, assuming that a beam predicted and output by the AI model is not actually measured by a User Equipment (UE), and a network device does not send corresponding measurement resources to the terminal based on the beam predicted and output by the AI model, the UE will be unable to receive these measurement resources. Consequently, the UE cannot obtain, based on the measurement resources, Quasi Co-Location (QCL) parameters of other reference signals or uplink/downlink channels quasi-co-located therewith. Without accurate acquisition of the QCL parameters, the UE cannot successfully receive or send corresponding reference signals or uplink/downlink channels.

### SUMMARY

In view of this, embodiments of the present disclosure expect to provide information transmission methods, information transmission apparatuses, information transmission devices, and storage media.

Technical solutions of the embodiments of the present disclosure are implemented as follows.

An embodiment of the present disclosure provides an information transmission method, applied to a terminal, the method including:

sending first information to a network device,
wherein the first information includes or associates with at least one of:

a number of measurement resources;
a periodicity of measurement resources;
frequency domain resource(s) occupied by measurement resources; or,
beam properties corresponding to measurement resources.

Furthermore, according to at least one embodiment of the present disclosure, the first information is used for the network device to determine Channel State Information (CSI) reporting configuration information, or the first information is associated with CSI reporting configuration information received by the terminal;
and/or,
the first information indicates information of measurement resources preferred or supported by the terminal.

Furthermore, according to at least one embodiment of the present disclosure, the CSI reporting configuration information is associated with N number of Channel State Information Reference Signal (CSI-RS) resource(s) or Synchronization Signal/PBCH Block (SSB) resource(s), where N is a positive integer.

Furthermore, according to at least one embodiment of the present disclosure, attributes of the N number of CSI-RS resource(s) or SSB resource(s) associated with the CSI reporting configuration information are same or partially same to attributes of at least one of the number of measurement resources, the periodicity of measurement resources, the frequency domain resource(s) occupied by measurement resources, or, the beam properties corresponding to measurement resources included in the first information;
or,
attributes of the N number of CSI-RS resource(s) or SSB resource(s) associated with the CSI reporting configuration

information are a specific value(s).

Furthermore, according to at least one embodiment of the present disclosure, the method further includes: receiving the CSI reporting configuration information sent by the network device.

Furthermore, according to at least one embodiment of the present disclosure, the first information is sent to the network device through one of:

capability reporting information of the terminal;
one or more Physical Uplink Shared Channels (PUSCHs);
one or more Physical Uplink Control Channels (PUCCHs);
CSI reporting information; or,
one or more Medium Access Control (MAC) Control Elements (CEs).

An embodiment of the present disclosure provides an information transmission method, applied to a network device, the method including:

receiving first information sent by a terminal,
wherein the first information includes or associates with at least one of:

a number of measurement resources;
a periodicity of measurement resources;
frequency domain resource(s) occupied by measurement resources; or,
beam properties corresponding to measurement resources.

Furthermore, according to at least one embodiment of the present disclosure, the first information is used for the network device to determine CSI reporting configuration information, or the first information is associated with CSI reporting configuration information received by the terminal;
and/or,
the first information indicates information of measurement resources preferred or supported by the terminal.

Furthermore, according to at least one embodiment of the present disclosure, the CSI reporting configuration information is associated with N number of CSI-RS resource(s) or SSB resource(s), where N is a positive integer.

Furthermore, according to at least one embodiment of the present disclosure, attributes of the N number of CSI-RS resource(s) or SSB resource(s) associated with the CSI reporting configuration information are same or partially same to attributes of at least one of the number of measurement resources, the periodicity of measurement resources, the frequency domain resource(s) occupied by measurement resources, or, the beam properties corresponding to measurement resources included in the first information;
or,
attributes of the N number of CSI-RS resource(s) or SSB resource(s) associated with the CSI reporting configuration information are set to a specific value(s).

Furthermore, according to at least one embodiment of the present disclosure, the method further includes: sending the CSI reporting configuration information to the terminal.

Furthermore, according to at least one embodiment of the present disclosure, the first information sent by the terminal is received through one of:

capability reporting information of the terminal;
one or more Physical Uplink Shared Channels (PUSCHs);
one or more Physical Uplink Control Channels (PUCCHs);
CSI reporting information; or,
one or more Medium Access Control (MAC) Control Elements (CEs).

An embodiment of the present disclosure provides an information transmission method, applied to a terminal, the method including:

sending second information to a network device,
wherein the second information includes or associates with indicators of K number of resources; indicators of the K number of resources are determined by the terminal based on M number of CSI-RS resources or SSB resources associated with CSI reporting configuration information, and the indicators of the K number of resources are associated with a first set associated with the CSI reporting configuration information, the first set including P number of CSI-RS resources or SSB resources, where K, M, and P are positive integers.

Furthermore, according to at least one embodiment of the present disclosure, the method further includes:

receiving third information sent by the network device, wherein the third information is used to indicate one or more resources for measurement by the terminal;
wherein the third information includes or associates with a second set, and wherein the second set includes at least one resource among the K number of resources that is different from the M number of CSI-RS resources or SSB resources associated with the CSI reporting configuration information.

Furthermore, according to at least one embodiment of the present disclosure, the receiving third information sent by the network device includes:

receiving the third information sent by the network device after CSI reporting;
or,
triggering or activating reception of the third information through first Downlink Control Information (DCI) or a first MAC CE.

Furthermore, according to at least one embodiment of the present disclosure, the CSI reporting configuration information is determined by the network device based on fourth information sent by the terminal;
wherein the fourth information includes or associates with at least one of:

a number of measurement resources;
a periodicity of measurement resources;
frequency domain resource(s) occupied by measurement resources; or,
beam properties corresponding to measurement resources.

Furthermore, according to at least one embodiment of the present disclosure, the fourth information indicates information of measurement resources preferred or supported by the terminal.
Furthermore, according to at least one embodiment of the present disclosure, the method further includes:

receiving fifth information sent by the network device, wherein the fifth information is used to indicate one or more resources for measurement by the terminal,
wherein the fifth information includes or associates with the K number of resources.

Furthermore, according to at least one embodiment of the present disclosure, the receiving fifth information sent by the network device includes:

receiving the fifth information sent by the network device after CSI reporting; or,
triggering or activating reception of the fifth information through second DCI or a second MAC CE.

An embodiment of the present disclosure provides an information transmission method, applied to a network device, the method including:

receiving second information sent by the terminal,
wherein the second information includes or associates with indicators of K number of resources; the indicators of the K number of resources are determined by the terminal based on M number of CSI-RS resources or SSB resources associated with CSI reporting configuration information, and the indicators of the K number of resources are associated with a first set associated with the CSI reporting configuration information, the first set including P number of CSI-RS resources or SSB resources, where K, M, and P are positive integers.

Furthermore, according to at least one embodiment of the present disclosure, the method further includes:

sending third information to the terminal, wherein the third information is used to indicate one or more resources for measurement by the terminal,
wherein the third information includes or associates with a second set, and wherein the second set includes at least one resource among the K number of resources that is different from the M number of CSI-RS resources or SSB resources associated with the CSI reporting configuration information.

Furthermore, according to at least one embodiment of the present disclosure, the sending third information to the

terminal includes:

sending the third information to the terminal after CSI reporting; or,
sending the third information to the terminal through first DCI or a first MAC CE.

Furthermore, according to at least one embodiment of the present disclosure, the CSI reporting configuration information is determined by the network device based on fourth information sent by the terminal;
wherein the fourth information includes or associates with at least one of:

a number of measurement resources;
a periodicity of measurement resources;
frequency domain resource(s) occupied by measurement resources; or,
beam properties corresponding to measurement resources.

Furthermore, according to at least one embodiment of the present disclosure, the fourth information indicates information of measurement resources preferred or supported by the terminal.
Furthermore, according to at least one embodiment of the present disclosure, the method further includes:

sending fifth information to the terminal, wherein the fifth information is used to indicate one or more resources for measurement by the terminal,
wherein the fifth information includes or associates with the K number of resources.

Furthermore, according to at least one embodiment of the present disclosure, the sending fifth information to the terminal includes:

sending the fifth information to the terminal after CSI reporting; or,
sending the fifth information to the terminal through second DCI or a second MAC CE.

An embodiment of the present disclosure provides an information transmission apparatus, including:

a first sending module, configured to send first information to a network device,
wherein the first information includes or associates with at least one of:

a number of measurement resources;
a periodicity of measurement resources;
frequency domain resource(s) occupied by measurement resources; or,
beam properties corresponding to measurement resources.

An embodiment of the present disclosure provides an information transmission apparatus, including:

a first receiving module, configured to receive first information sent by a terminal,
wherein the first information includes or associates with at least one of:

a number of measurement resources;
a periodicity of measurement resources;
frequency domain resource(s) occupied by measurement resources; or,
beam properties corresponding to measurement resources.

An embodiment of the present disclosure provides an information transmission apparatus, including:

a second sending module, configured to send second information to a network device,
wherein the second information includes or associates with indicators of K number of resources; indicators of the K number of resources are determined by the terminal based on M number of CSI-RS resources associated with CSI reporting configuration information, and the indicators of the K number of resources are associated with a first set associated with the CSI reporting configuration information, the first set including P number of CSI-RS resources or SSB resources, where K, M, and P are positive integers.

An embodiment of the present disclosure provides an information transmission apparatus, including:

a second receiving module, configured to receive second information sent by the terminal,
wherein the second information includes or associates with indicators of K number of resources; the indicators of the K number of resources are determined by the terminal based on results obtained from respective resources among M number of CSI-RS resources or SSB resources associated with CSI reporting configuration information, and the indicators of the K number of resources are associated with a first set associated with the CSI reporting configuration information, the first set including P number of CSI-RS resources or SSB resources, where K, M, and P are positive integers.

An embodiment of the present disclosure provides a terminal, including a processor and a memory for storing a computer program capable of running on the processor,
wherein the processor, when running the computer program, is configured to execute steps of any one of the terminal-side methods described above.

An embodiment of the present disclosure provides a network device, including a processor and a memory for storing a computer program capable of running on the processor,
wherein the processor, when running the computer program, is configured to execute steps of any one of the network-device-side methods described above.

An embodiment of the present disclosure provides a storage medium having a computer program stored thereon, wherein the computer program, when executed by a processor, implements steps of any one of the methods described above.

According to the information transmission methods, information transmission apparatuses, information transmission devices, and storage media provided in the embodiments of the present disclosure, the method includes: sending, by a terminal, first information to a network device, wherein the first information includes or associates with at least one of: a number of measurement resources; a periodicity of measurement resources; frequency domain resource(s) occupied by measurement resources; or, beam properties corresponding to measurement resources. By adopting the technical solutions provided in the embodiments of the present disclosure, the terminal sends the first information to the network device; the first information indicates information of measurement resources preferred or supported by the terminal, such that the network device can configure measurement resources included in the CSI reporting configuration information according to the information of the measurement resources preferred or supported by the terminal. Subsequently, the terminal performs AI model inference by using the configured measurement resources, which helps to improve the inference performance of the AI model.

In addition, in the embodiments of the present disclosure, the terminal sends the second information to the network device; wherein the second information includes or associates with indicators of K number of resources; the indicators of the K number of resources are determined by the terminal based on M number of CSI-RS resources or SSB resources associated with CSI reporting configuration information, and the indicators of the K number of resources are associated with a first set associated with the CSI reporting configuration information, the first set including P number of CSI-RS resources or SSB resources, where K, M, and P are positive integers. By adopting the technical solutions provided in the embodiments of the present disclosure, the terminal sends the second information to the network device, such that the network device can indicate, according to the second information, one or more resources for measurement by the terminal. This avoids a problem in related technologies where the terminal cannot measure these resources in a case where at least one of the K number of resources does not belong to the M number of CSI-RS resources or SSB resources associated with the CSI reporting configuration information. Subsequently, based on reception of these resources, the terminal can obtain QCL parameters of other reference signals or uplink/downlink channels quasi-co-located therewith, so as to successfully receive or send corresponding reference signals or uplink/downlink channels.

## BRIEF DESCRIPTION OF THE DRAWINGS

FIG. 1 is a schematic diagram of traditional beam tracking in the related art;
FIG. 2 is a first schematic diagram of AI-based spatial domain beam prediction in the related art;
FIG. 3 is a second schematic diagram of AI-based spatial domain beam prediction in the related art;
FIG. 4 is a third schematic diagram of AI-based spatial domain beam prediction in the related art;
FIG. 5 is a first schematic flowchart of an implementation flow of an information transmission method according to an embodiment of the present disclosure;
FIG. 6 is a second schematic flowchart of an implementation flow of an information transmission method according to an embodiment of the present disclosure;
FIG. 7 is a third schematic flowchart of an implementation flow of an information transmission method according to an embodiment of the present disclosure;

FIG. 8 is a fourth schematic flowchart of an implementation flow of an information transmission method according to an embodiment of the present disclosure;

FIG. 9 is a first schematic structural diagram of an information transmission apparatus according to an embodiment of the present disclosure;

FIG. 10 is a second schematic structural diagram of an information transmission apparatus according to an embodiment of the present disclosure;

FIG. 11 is a third schematic structural diagram of an information transmission apparatus according to an embodiment of the present disclosure;

FIG. 12 is a fourth schematic structural diagram of an information transmission apparatus according to an embodiment of the present disclosure;

FIG. 13 is a schematic structural diagram of an information terminal according to an embodiment of the present disclosure; and

FIG. 14 is a schematic structural diagram of an information network device according to an embodiment of the present disclosure.

## DETAILED DESCRIPTION

Before introducing the technical solutions of the embodiments of the present disclosure, related art is introduced first.

Existing research results indicate that under the design framework of 5th Generation Mobile Communication Technology (5G), Artificial Intelligence (AI) can obtain corresponding gains in multiple fields such as CSI feedback, beam management, and positioning, showing promising application prospects. Currently, research contents include three major use cases: CSI feedback, beam management, and positioning, as well as AI model deployment, inference, update, simulation evaluation methods, and the like. A typical use case of AI beam management is spatial domain beam prediction. AI-enabled spatial domain beam prediction can predict Layer 1 reference signal received power (L1-RSRP) of all beam pairs (Set A) and select an optimal beam by measuring L1-RSRP of a portion of beam pairs (Set B), so as to reduce terminal beam measurement overhead.

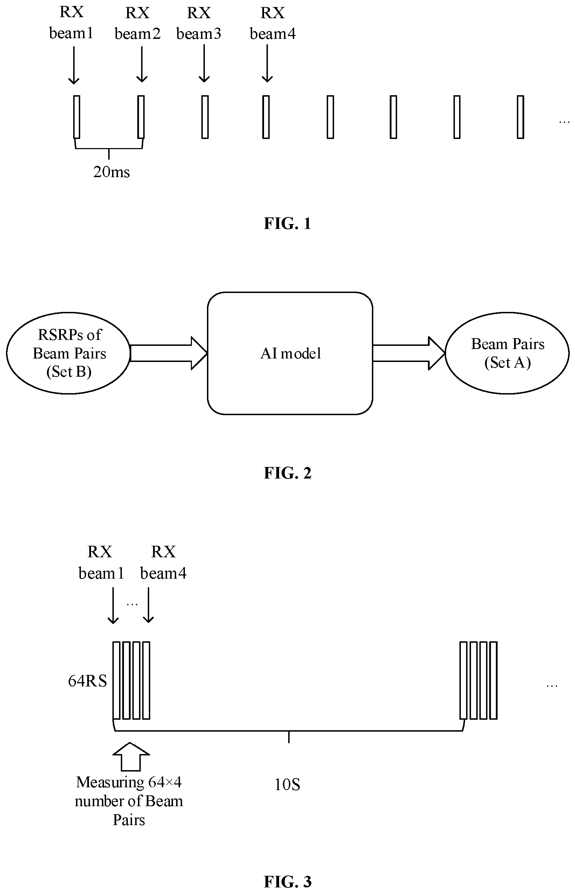

FIG. 1 is a schematic diagram of traditional beam tracking in the related art. As shown in FIG. 1, assuming that a base station corresponds to 64 transmit beams, and a terminal corresponds to 4 receive beams, which are respectively denoted by RX beam 1, RX beam 2, RX beam 3, and RX beam 4, the base station configures 8 CSI-RS reference signals in a periodic resource set. A beam tracking frequency or reference signal period is 20 ms. Within 4 periods, the terminal receives the 8 transmit beams by respectively using the 4 receive beams, thereby obtaining L1-RSRPs of 32 beam pairs. The terminal reports CSI-RS Resource Indicators (CRIs) and L1-RSRPs of 4 beam pairs with the largest L1-RSRPs, and the base station indicates one of the reference signals to communicate with the terminal.

FIG. 2 is a schematic diagram of AI-based spatial domain beam prediction in the related art. As shown in FIG. 2, an implementation method of AI-based spatial domain beam prediction is as follows: first, training is performed based on a large dataset, for example, the dataset includes millions of samples, each sample including RSRPs of all beam pairs at a certain moment. Second, for beam pair prediction, during training, RSRPs of a small number of beam pairs (Set B) are used as an input to an AI model (which is usually a neural network), and RSRPs of all beam pairs (Set A) are used as a label of an output of the AI model. Parameters within the AI model are continuously updated through a gradient descent algorithm until an error (which can be measured by a Normalized Mean Squared Error (NMSE)) between the output of the AI model and the label is less than a threshold, at which time the model converges and has a good prediction capability. In addition, for transmit beam prediction, according to a certain receive beam assumption, during training, RSRPs of a small number of transmit beams are used as the input to the AI model, and RSRPs of all transmit beams are used as the label of the output of the AI model, and the parameters within the AI model are continuously updated through the gradient descent algorithm until the error between the output of the AI model and the label is less than the threshold.

FIG. 3 is a schematic diagram of AI-based spatial domain beam prediction in the related art. As shown in FIG. 3, for AI-based spatial domain beam pair prediction, first, data is collected for AI model training. The base station needs to sweep the set of all 256 beam pairs (Set A) within a short time to prevent RSRPs of different beam pairs from changing over time, and a period of Set A can be relatively long. Terminal-side training does not require reporting measurement results, whereas network-side training requires reporting measurement results.

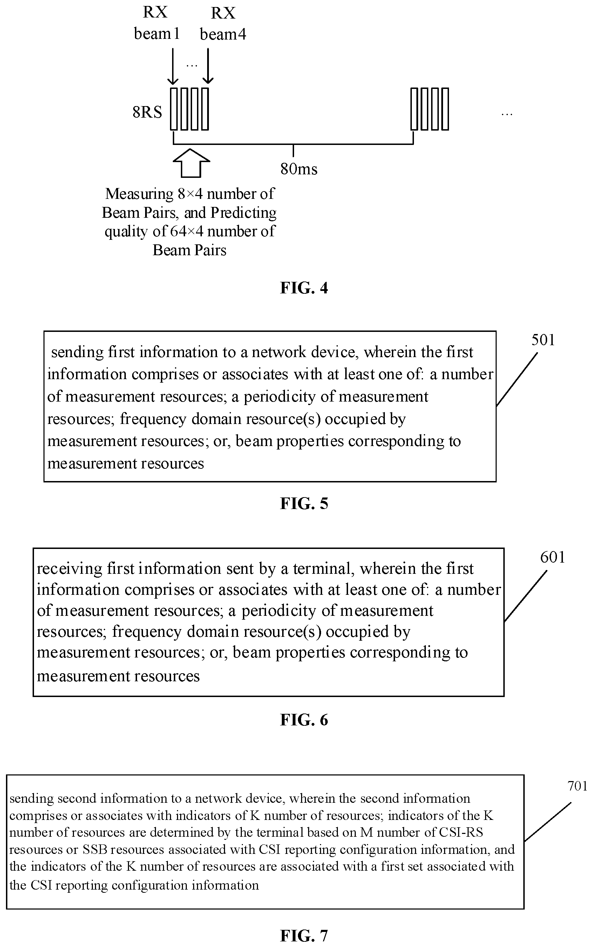

FIG. 4 is a schematic diagram of AI-based spatial domain beam prediction in the related art. As shown in FIG. 4, inference is performed on the terminal side. For example, the base station configures $8 \times 4 = 32$ CSI-RS reference signals (Set B), where a reference signal period is 80 ms. At each moment, the terminal measures L1-RSRPs of 32 beam pairs, and the terminal uses the measured 32 L1-RSRPs as the input to the AI model. Based on the AI model, L1-RSRPs of 256 beam pairs are predicted, and the terminal reports CRIs and L1-RSRPs of K beam pairs with the best RSRPs. According to predicted RSRP values, beam pair loads, and other conditions, the base station indicates one of the beam pairs to communicate with the terminal.

After performing inference for a period of time, the terminal needs to collect data for monitoring model performance. The terminal sweeps all beam pairs (Set A) with a relatively large period, and the terminal or the network compares an error between an optimal beam predicted among all the beam pairs (Set A) based on the 32 reference signals (Set B) and a true optimal beam among all the beam pairs. When a model-monitored Key Performance Indicator (KPI), such as beam prediction accuracy, is less than a threshold, the terminal or the network triggers model updating, switching, or fallback to traditional beam selection.

Table 1 is a schematic representation of a CSI reporting framework in the related art. As shown in Table 1, only one periodic resource set can be configured, which includes at most 64 reference signals (RSs).

**Table 1**

```
CSI-ReportConfig ::=                    SEQUENCE {
    reportConfigId                          CSI-ReportConfigId,
    carrier                                 ServCellIndex
  OPTIONAL,     -- Need S
    resourcesForChannelMeasurement          CSI-ResourceConfigId,
    csi-IM-ResourcesForInterference       CSI-ResourceConfigId
OPTIONAL,     -- Need R
    nzp-CSI-RS-ResourcesForInterference    CSI-ResourceConfigId
OPTIONAL,     -- Need R
   reportConfigType                         CHOICE {
       periodic                                  SEQUENCE {
           reportSlotConfig
  CSI-ReportPeriodicityAndOffset,
           pucch-CSI-ResourceList                        SEQUENCE
```

```
(SIZE (1..maxNrofBWPs)) OF PUCCH-CSI-Resource
                },
    ...}
    reportQuantity
    ...
    groupBasedBeamReporting                    CHOICE {
            enabled                                NULL,
            disabled                               SEQUENCE {
              nrofReportedRS      //reporting several best beams//
ENUMERATED
    {n1, n2, n3, n4}                    OPTIONAL    -- Need S
            }
        },
    ...
```

Table 2 is a schematic representation of a CSI-RS resource set configuration in the related art.

**Table 2**

**CSI-RS Resource Set is configured as below:**

```
    NZP-CSI-RS-ResourceSet ::=          SEQUENCE {
        nzp-CSI-ResourceSetId               NZP-CSI-RS-ResourceSetId,
        nzp-CSI-RS-Resources                      SEQUENCE (SIZE
(1..maxNrofNZP-CSI-RS-ResourcesPerSet)) OF NZP-CSI-RS-ResourceId,
        repetition                           ENUMERATED { on, off }
OPTIONAL,    -- Need S
        aperiodicTriggeringOffset                        INTEGER(0..6)
OPTIONAL,    -- Need S
        ...,
    }
```

However, existing research shows that in a scenario of terminal-side inference, even if a model of a UE has a

certain generalization capability, the inference performance of the AI model on the UE side is sufficiently good only under several specific beam patterns or several specific numbers of beams. If a base station cannot obtain the specific beam patterns or the specific numbers of beams, attributes of reference signals (RSs) configured by the base station cannot adapt to the specific model of the UE, which in turn affects the inference performance of the AI model, thereby degrading the performance advantages of AI.

In addition, on the other hand, if a beam predicted and output by the AI model is not actually measured by the UE, i.e., the predicted beam is a part in a beam set (Set A) that does not overlap with a beam set (Set B), and a network device does not send corresponding measurement resources to the terminal based on the beam predicted and output by the AI model, this will result in the UE being unable to obtain, based on reception of these resources, Quasi Co-Location (QCL) parameters of other reference signals or uplink/downlink channels quasi-co-located therewith. The QCL parameters may include Doppler shift, Doppler spread, average delay, delay spread, and Spatial Rx parameter. Without accurate acquisition of these QCL parameters, the UE cannot successfully receive or send corresponding reference signals or uplink/downlink channels. One way may be configuring, for the UE, reference signals corresponding to these predicted beams through a Radio Resource Control (RRC) configuration to allow the UE to perform measurement thereon. However, RRC reconfiguration will significantly increase beam measurement latency, thereby affecting processing of corresponding quasi-co-located reference signals and uplink/downlink channels.

Based on this, in the embodiments of the present disclosure, a terminal sends first information to a network device, wherein the first information includes or associates with at least one of: a number of measurement resources; a periodicity of measurement resources; frequency domain resource(s) occupied by measurement resources; or, beam properties corresponding to measurement resources.

In addition, in the embodiments of the present disclosure, a terminal sends second information to a network device, wherein the second information includes or associates with indicators of K number of resources; the indicators of the K number of resources are determined by the terminal based on respective resources among M number of Channel State Information Reference Signal (CSI-RS) resources or Synchronization Signal/PBCH Block (SSB) resources associated with Channel State Information (CSI) reporting configuration information, and the indicators of the K number of resources are associated with a first set associated with the CSI reporting configuration information, the first set including P number of CSI-RS resources or SSB resources, where K, M, and P are positive integers.

Referring to FIG. 5, FIG. 5 is a schematic flowchart of an implementation flow of an information transmission method according to an embodiment of the present disclosure. The method is applied to a terminal. As shown in FIG. 5, the method includes step 501:

Step 501: sending first information to a network device,
the first information includes or associates with at least one of:

a number of measurement resources;
a periodicity of measurement resources;
frequency domain resource(s) occupied by measurement resources; or,
beam properties corresponding to measurement resources.

As an example, the first information is used for the network device to determine CSI reporting configuration information, or the first information is associated with CSI reporting configuration information received by the terminal; and/or, the first information indicates information of measurement resources preferred or supported by the terminal.

As an example, the measurement resources refer to CSI-RS resources or SSB resources.

As an example, the terminal can obtain channel quality information, such as L1-RSRP or Layer 1 Signal to Interference plus Noise Ratio (L1-SINR), by performing measurement on the measurement resources.

As an example, the network device can send the measurement resources according to one or more beamforming manners or precoding matrices.

As an example, the beam properties can include a 3dB width of a beam, a normal direction of a beam, a sidelobe direction of a beam, and the like.

As an example, considering that the inference performance of the AI model on the terminal side is sufficiently good only under some beam patterns or some numbers of beams, the terminal can report attributes of preferred or supported measurement resources to the network device, such as a base station.

In some embodiments, the CSI reporting configuration information is associated with N number of CSI-RS resources or SSB resources, where N is a positive integer.

As an example, after receiving the first information reported by the terminal (such as a UE), the network device (such as a base station) can, by referring to the first information, configure measurement resources included in the CSI reporting configuration information for the terminal, wherein the CSI reporting configuration information is associated with N number of CSI-RS resources or SSB resources for channel measurement.

In some embodiments, attributes of the N number of CSI-RS resources or SSB resources associated with the CSI reporting configuration information are same or partially same to attributes of at least one of the number of measurement resources, the periodicity of measurement resources, the frequency domain resource(s) occupied by measurement resources, or, the beam properties corresponding to measurement resources included in the first information; or, attributes of the N number of CSI-RS resources or SSB resources associated with the CSI reporting configuration information are a specific value(s).

As an example, the network device (such as the base station) can configure the CSI reporting configuration information completely according to the first information reported by the terminal (such as the UE).

For example, assuming that the attributes of the preferred or supported measurement resources reported by the UE include the number of measurement resources denoted as M, the number N of the CSI-RS resources or SSB resources associated with the CSI reporting configuration information is equal to M.

Alternatively, assuming that the attributes of the preferred or supported measurement resources reported by the UE include at least one of the number of measurement resources, the periodicity of measurement resources, the frequency domain resources occupied by the resources, or the beam properties corresponding to the measurement resources, corresponding attributes of the CSI reporting configuration information are equal or partially equal to corresponding attributes reported by the UE. For instance, if the attributes reported by the UE include: the number of measurement resources = A, and the period of measurement resources = B, then the number of measurement resources associated with the CSI reporting configuration information = A, while the period of measurement resources = C.

Alternatively, the network device (such as the base station) can configure a corresponding attribute of the CSI reporting configuration information as a specific value (i.e., a certain special value) to indicate to the terminal that the corresponding attribute of the CSI reporting configuration information is same to the attribute of the preferred or supported measurement resources reported by the terminal, that is, the network device configures the CSI reporting configuration information according to the first information reported by the terminal, which can effectively reduce high-layer configuration signaling overhead. Alternatively, the base station does not configure the corresponding attribute, indicating that the base station configures the CSI reporting configuration information completely according to the corresponding attribute reported by the UE.

In some embodiments, the method further includes:
receiving the CSI reporting configuration information sent by the network device.

In some embodiments, the first information is sent to the network device through one of:

capability reporting information of the terminal;
one or more Physical Uplink Shared Channels (PUSCHs);
one or more Physical Uplink Control Channels (PUCCHs);
CSI reporting information; or,
one or more Medium Access Control (MAC) Control Elements (CEs).

Embodiments of the present disclosure have the following advantages.

The terminal sends the first information to the network device; wherein the first information includes or associates with at least one of: a number of measurement resources; a periodicity of measurement resources; frequency domain resource(s) occupied by measurement resources; or, beam properties corresponding to measurement resources. The terminal reports the first information, i.e., information of measurement resources preferred or supported by the terminal, to the network device, such that the network device can configure measurement resources included in the CSI reporting configuration information according to the information of the measurement resources preferred or supported by the terminal. Subsequently, the terminal performs AI model inference by using the configured measurement resources, which helps to improve the inference performance of the AI model.

By enabling the terminal to report the first information, i.e., information of measurement resources preferred or supported by the terminal, to the network device, it is equivalent to implicitly reporting information related to the AI model on the terminal side to the network device. This can help the network device configure targeted, specific measurement resources for the terminal according to characteristics of the AI model on the UE side, thereby maximizing beam prediction accuracy based on the AI model subsequently.

Referring to FIG. 6, FIG. 6 is a schematic flowchart of an implementation flow of an information transmission method according to an embodiment of the present disclosure. The method is applied to a network device. As shown in FIG. 6, the method includes step 601:

Step 601: receiving first information sent by a terminal,
the first information includes or associates with at least one of:

a number of measurement resources;

a periodicity of measurement resources;
frequency domain resource(s) occupied by measurement resources; or,
beam properties corresponding to measurement resources.

As an example, the first information is used for the network device to determine CSI reporting configuration information, or the first information is associated with CSI reporting configuration information received by the terminal; and/or, the first information indicates information of measurement resources preferred or supported by the terminal.

As an example, the measurement resources refer to CSI-RS resources or SSB resources.

As an example, the terminal can obtain channel quality information, such as L1-RSRP or L1-SINR, by performing measurement on the measurement resources.

As an example, the network device can send the measurement resources according to one or more beamforming manners or precoding matrices.

As an example, the beam properties can include a 3dB width of a beam, a normal direction of a beam, a sidelobe direction of a beam, and the like.

As an example, considering that the inference performance of the AI model on the terminal side is sufficiently good only under some beam patterns or some numbers of beams, the terminal can report attributes of preferred or supported measurement resources to the network device, such as a base station.

In some embodiments, the CSI reporting configuration information is associated with N number of CSI-RS resources or SSB resources, where N is a positive integer.

As an example, after receiving the first information reported by the terminal (such as a UE), the network device (such as a base station) can, by referring to the first information, configure the CSI reporting configuration information for the terminal, wherein the CSI reporting configuration information is associated with N number of CSI-RS resources or SSB resources for channel measurement.

In some embodiments, attributes of the N number of CSI-RS resources or SSB resources associated with the CSI reporting configuration information are same or partially same to attributes of at least one of the number of measurement resources, the periodicity of measurement resources, the frequency domain resource(s) occupied by measurement resources, or, the beam properties corresponding to measurement resources included in the first information; or, attributes of the N number of CSI-RS resources or SSB resources associated with the CSI reporting configuration information are set to a specific value(s).

As an example, the network device (such as the base station) can configure the CSI reporting configuration information completely according to the first information reported by the terminal (such as the UE).

For example, assuming that the attributes of the preferred or supported measurement resources reported by the UE include the number of measurement resources denoted as M, the number N of the CSI-RS resources or SSB resources associated with the CSI reporting configuration information is equal to M.

Alternatively, assuming that the attributes of the preferred or supported measurement resources reported by the UE include at least one of the number of measurement resources, the periodicity of measurement resources, the frequency domain resources occupied by the resources, or the beam properties corresponding to the measurement resources, corresponding attributes of the CSI reporting configuration information are equal or partially equal to corresponding attributes reported by the UE. For instance, if the attributes reported by the UE include: the number of measurement resources = A, and the period of measurement resources = B, then the number of measurement resources associated with the CSI reporting configuration information = A, while the period of measurement resources = C.

Alternatively, the network device (such as the base station) can configure a corresponding attribute of the CSI reporting configuration information as a specific value (i.e., a certain special value) to indicate to the terminal that the corresponding attribute of the CSI reporting configuration information is same to the attribute of the preferred or supported measurement resources reported by the terminal, that is, the network device configures the CSI reporting configuration information according to the first information reported by the terminal, which can effectively reduce high-layer configuration signaling overhead. Alternatively, the base station does not configure the corresponding attribute, indicating that the base station configures the CSI reporting configuration information completely according to the corresponding attribute reported by the UE.

In some embodiments, the method further includes:
sending the CSI reporting configuration information to the terminal.

In some embodiments, the first information sent by the terminal is received through one of:

capability reporting information of the terminal;
one or more Physical Uplink Shared Channels (PUSCHs);
one or more Physical Uplink Control Channels (PUCCHs);
CSI reporting information; or,
one or more Medium Access Control (MAC) Control Elements (CEs).

Embodiments of the present disclosure have the following advantages.

The terminal sends the first information to the network device; wherein the first information includes or associates with at least one of: a number of measurement resources; a periodicity of measurement resources; frequency domain resource(s) occupied by measurement resources; or, beam properties corresponding to measurement resources. The terminal reports the first information, i.e., information of measurement resources preferred or supported by the terminal, to the network device, such that the network device can configure measurement resources included in the CSI reporting configuration information according to the information of the measurement resources preferred or supported by the terminal. Subsequently, the terminal performs AI model inference by using the configured measurement resources, which helps to improve the inference performance of the AI model.

Referring to FIG. 7, FIG. 7 is a schematic flowchart of an implementation flow of an information transmission method according to an embodiment of the present disclosure. The method is applied to a terminal. As shown in FIG. 7, the method includes step 701:

Step 701: sending second information to a network device,
the second information includes or associates with indicators of K number of resources; the indicators of the K number of resources are determined by the terminal based on respective resources among M number of Channel State Information Reference Signal (CSI-RS) resources or Synchronization Signal/PBCH Block (SSB) resources associated with Channel State Information (CSI) reporting configuration information, and the indicators of the K number of resources are associated with a first set associated with the CSI reporting configuration information, the first set including P number of CSI-RS resources or SSB resources, where K, M, and P are positive integers.

In some embodiments, the method further includes:
receiving third information sent by the network device, wherein the third information is used to indicate one or more resources for measurement by the terminal; wherein the third information includes or associates with a second set, and wherein the second set includes at least one resource among the K number of resources that is different from the M number of CSI-RS resources or SSB resources associated with the CSI reporting configuration information.

In some embodiments, the receiving third information sent by the network device includes:

receiving the third information sent by the network device after CSI reporting; or,
triggering or activating reception of the third information through first Downlink Control Information (DCI) or a first MAC CE.

In some embodiments, the CSI reporting configuration information is determined by the network device based on fourth information sent by the terminal; wherein the fourth information includes or associates with at least one of:

a number of measurement resources;
a periodicity of measurement resources;
frequency domain resource(s) occupied by measurement resources; or,
beam properties corresponding to measurement resources.

In some embodiments, the fourth information indicates information of measurement resources preferred or supported by the terminal.

In some embodiments, the method further includes:
receiving fifth information sent by the network device, wherein the fifth information is used to indicate one or more resources for measurement by the terminal, wherein the fifth information includes or associates with the K number of resources.

In some embodiments, the receiving fifth information sent by the network device includes:

receiving the fifth information sent by the network device after CSI reporting; or,
triggering or activating reception of the fifth information through second DCI or a second MAC CE.

As an example, a CSI reporting configuration configured by the network device for the UE is associated with a predicted resource set, i.e., the first set, wherein the first set includes P number of CSI-RS resources or SSB resources ($P \geq 1$).

As an example, results (such as channel quality RSRP) obtained from measuring respective resources among the M number of CSI-RS resources or SSB resources associated with the CSI reporting configuration information may be used as an input to a first model on the terminal side, and the first model outputs indicators of the predicted K number of resources (beam indicators), wherein the first model may refer to an AI model. Meanwhile, optionally, the first model may

additionally output information such as RSRPs corresponding to the predicted resources.

As an example, the UE determines beams of K number of optimal resources based on configured measurement resources.

As an example, the UE reports indicators of K number of resources, and each resource indicator occupies $\lceil \log_2^{P} \rceil$ bits, where P represents a total number of resources in the first set, a resource indicator equal to 0 corresponds to a first resource in the predicted resource set, a resource indicator equal to 1 corresponds to a second resource in the predicted resource set, and so on.

If resources corresponding to the indicators of the K number of resources are represented by {resource#1, resource#2, ..., resource#k}, at least one of the resources does not belong to the M number of CSI-RS resources for channel measurement associated with the CSI reporting configuration information, and the at least one resource is denoted as resource set #A, i.e., the second set, and the resource set #A includes {resource#1, resource#2, ..., resource#n}. If the terminal does not actually measure the resources in the resource set #A, the terminal cannot obtain, based on reception of these resources, QCL parameters of other reference signals or uplink/downlink channels quasi-co-located therewith. The QCL parameters may include Doppler shift, Doppler spread, average delay, delay spread, and Spatial Rx parameter. Without accurate acquisition of these QCL parameters, the terminal cannot successfully receive or send corresponding reference signals or uplink/downlink channels. One way may be configuring, for the terminal, the resources in the resource set #A through RRC configuration to allow the terminal to perform measurement thereon, but this will significantly increase beam measurement latency, thereby affecting processing of corresponding reference signals and uplink/downlink channels.

In the embodiments of the present disclosure, the following solutions are provided.

**A first way: receiving the third information sent by the network device after CSI reporting; wherein the third information includes the second set.**

Herein, receiving the third information sent by the network device after CSI reporting may include:

in a case where the second set is configured as aperiodic, receiving the third information sent by the network device based on a slot offset corresponding to the second set configured through RRC; or,

in a case where the second set is configured as semi-persistent, receiving the third information sent by the network device based on a number of slots corresponding to a subcarrier spacing parameter of the second set configured through RRC, wherein the number of slots is a number of slots in a subframe; or,

in a case where the second set is configured as semi-persistent or periodic, receiving the third information sent by the network device based on a transmission pattern corresponding to the second set configured through RRC, wherein the transmission pattern includes a frequency domain position occupied by resources, a transmission slot offset, and a transmission period.

Specifically, the terminal sends the second information to the network device through a CSI reporting procedure, which can trigger the network device to send the resource set #A (i.e., the second set) to the terminal, wherein a moment of CSI reporting is denoted as slot n.

If the second set configured by the network device is aperiodic, and a slot offset (slotoffset) configured by the network device through RRC is equal to d, the terminal will receive the resource set #A (i.e., the second set) in a first slot after slot n+d;

If the second set configured by the network device is semi-persistent, the terminal starts receiving the resource set #A (i.e., the second set) in a first slot after slot $n+3\times N_{slotsubframe,\mu}$, where n represents a slot in which the terminal performs CSI reporting, $N_{slotsubframe,\mu}$ represents a number of slots in a subframe corresponding to a subcarrier spacing parameter $\mu$, and $\mu$ is a subcarrier spacing parameter corresponding to a Sub-Carrier Spacing (SCS) configuration of a PUSCH or a PUCCH on which the CSI reporting is carried.

If the second set configured by the network device is semi-persistent or periodic, the network device configures a transmission pattern of the second set through RRC, wherein the transmission pattern includes a frequency domain position occupied by resources, a transmission slot offset (slotoffset), a transmission period, and the like. Then, the network device sends the second set in an (n+T)-th slot after slot n, wherein slot n+T is a first occasion for transmitting the second set after slot n, T is a positive integer, and T is associated with the transmission pattern. That is, the network device transmits reference signals in the resource set #A (i.e., the second set) on a nearest CSI-RS transmission occasion after slot n, and the terminal receives the second set on the transmission occasion.

**A second way: receiving the fifth information sent by the network device after CSI reporting; wherein the fifth information includes K number of resources.**

Herein, receiving the third information sent by the network device may include:

in a case where the second set is configured as aperiodic, receiving the third information sent by the network device

based on a slot offset corresponding to the second set configured through RRC; or,

in a case where the second set is configured as semi-persistent, receiving the third information sent by the network device based on a number of slots corresponding to a subcarrier spacing parameter of the second set configured through RRC, wherein the number of slots is a number of slots in a subframe; or,

in a case where the second set is configured as semi-persistent or periodic, receiving the third information sent by the network device based on a transmission pattern corresponding to the second set configured through RRC, wherein the transmission pattern includes a frequency domain position occupied by resources, a transmission slot offset, and a transmission period.

Specifically, the terminal sends the second information to the network device through a CSI reporting procedure, which can trigger the network device to send the K number of optimal resources to the terminal.

If the K number of resources configured by the network device are aperiodic, and a configured slot offset (slotoffset) is equal to d, the UE will receive the K number of resources in a first slot after slot n+d.

If the K number of resources configured by the network device are semi-persistent, the terminal starts receiving the K number of resources in a first slot after slot $n+3\times N_{slotsubframe,\mu}$, wherein $N_{slotsubframe,\mu}$ represents a number of slots in a subframe corresponding to a subcarrier spacing parameter $\mu$, and $\mu$ is a subcarrier spacing parameter corresponding to an SCS configuration of a PUSCH or a PUCCH on which the CSI reporting is carried.

If the K number of resources configured by the network device are semi-persistent or periodic, the network device can also configure a transmission pattern of the K number of resources through RRC, wherein the transmission pattern includes a frequency domain position occupied by resources, a transmission slot offset (slotoffset), a transmission period, and the like. Then, the network device sends the K number of resources in an (n+T)-th slot after slot n, wherein slot n+T is a first occasion for transmitting the K number of resources after slot n, T is a positive integer, and T is associated with the transmission pattern. That is, the network device transmits reference signals in the K number of resources on a nearest CSI-RS transmission occasion after slot n, and the terminal receives the K number of resources on the transmission occasion.

**A third way: triggering or activating reception of the third information through first DCI or a first MAC CE, wherein the third information includes the second set.**

Herein, triggering or activating reception of the third information through DCI or a MAC CE may include:

in a case where the second set is configured as aperiodic, after receiving the DCI sent by the network device, receiving the third information sent by the network device based on a slot offset corresponding to the second set configured through RRC; or,

in a case where the second set is configured as semi-persistent, after receiving the MAC CE sent by the network device, receiving the third information sent by the network device based on a number of slots corresponding to a subcarrier spacing parameter of the second set configured through RRC, wherein the number of slots is a number of slots in a subframe; or,

in a case where the second set is configured as semi-persistent, after receiving the DCI sent by the network device, receiving the third information sent by the network device based on a slot offset corresponding to the second set configured through RRC.

Specifically, the network device (such as the base station) sends a DCI or a MAC CE based on received CSI reporting, to activate or trigger transmission of the resource set #A (i.e., the second set).

If the second set configured by the network device is aperiodic and triggered through DCI, and a slot offset (slotoffset) configured by the network device through RRC is equal to d, and a transmission moment of the DCI is denoted as slot n, the UE will receive the resource set #A (i.e., the second set) in a first slot after slot n+d;

If the second set configured by the network device is semi-persistent and activated through MAC CE, and a transmission moment of a PUCCH carrying HARQ-ACK corresponding to a PDSCH carrying the MAC CE is denoted as slot n, the UE will start receiving the resource set #A (i.e., the second set) in a first slot after slot $n+3\times N_{slotsubframe,\mu}$, wherein $N_{slotsubframe,\mu}$ represents a number of slots in a subframe corresponding to a subcarrier spacing parameter $\mu$, and $\mu$ is a subcarrier spacing parameter corresponding to an SCS configuration of a PUSCH or a PUCCH on which the CSI reporting is carried.

If the second set configured by the network device is semi-persistent and activated through DCI, and a configured slot offset (slotoffset) is equal to d, and a transmission moment of the DCI is denoted as slot n, the UE will receive the resource set #A (i.e., the second set) in a first slot after slot n+d.

**A fourth way: triggering or activating reception of the fifth information through second DCI or a second MAC CE, wherein the fifth information includes K number of resources.**

Herein, based on the received CSI reporting, the network device (such as the base station) sends a DCI or a MAC CE to directly activate or trigger transmission of the K number of optimal resources, wherein a specific triggering or

activation timing relationship is same to that in the third way.

Embodiments of the present disclosure have the following advantages.

The terminal sends the second information to the network device; the second information includes indicators of K number of resources; the K number of resources are determined by the terminal based on respective resources among M number of CSI-RS resources or SSB resources associated with CSI reporting configuration information, and the indicators of the K number of resources are associated with a first set associated with the CSI reporting configuration information, the first set including P number of CSI-RS resources or SSB resources, where K, M, and P are positive integers. Thus, the network device can indicate, according to the second information, one or more resources for measurement by the terminal. This avoids a problem in related technologies where the terminal cannot measure these resources in a case where at least one of the K number of resources does not belong to the M number of CSI-RS resources or SSB resources associated with the CSI reporting configuration information. Subsequently, based on reception of these resources, the terminal can obtain QCL parameters of other reference signals or uplink/downlink channels quasi-co-located therewith, so as to successfully receive or send corresponding reference signals or uplink/downlink channels.

In a case where the UE does not measure beams predicted by the AI model, by using a flexible terminal-triggering/activating or base-station-triggering/activating manner, transmission and measurement of reference signals corresponding to the predicted beams are rapidly triggered/activated, which reduces beam measurement latency, improves reception or transmission accuracy of reference signals and uplink/downlink channels, and guarantees system throughput.

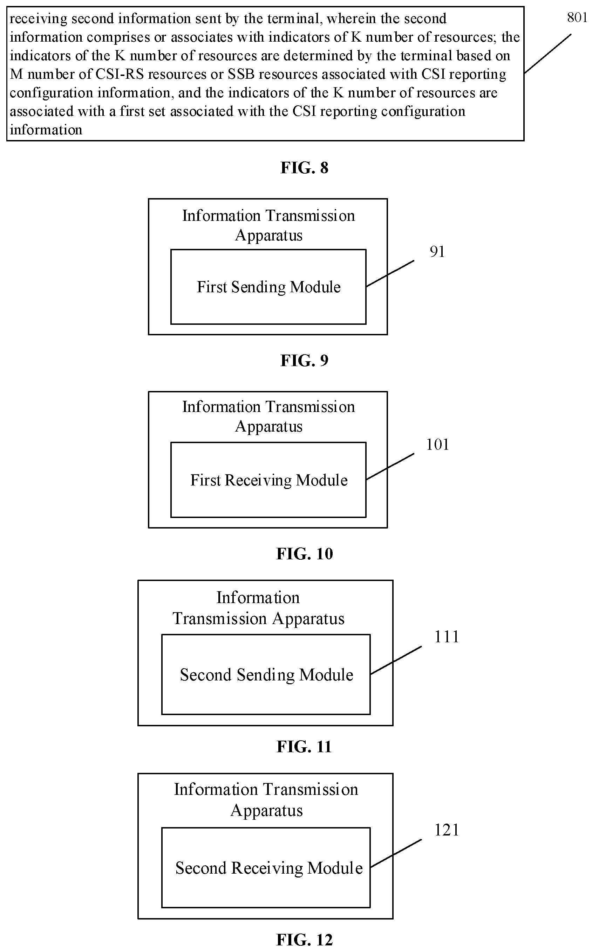

Referring to FIG. 8, FIG. 8 is a schematic flowchart of an implementation flow of an information transmission method according to an embodiment of the present disclosure. The method is applied to a network device. As shown in FIG. 8, the method includes step 801:

Step 801: receiving the second information sent by the terminal,
the second information includes or associates with indicators of K number of resources; the indicators of the K number of resources are determined by the terminal based on respective resources among M number of CSI-RS resources or SSB resources associated with CSI reporting configuration information, and the indicators of the K number of resources are associated with a first set associated with the CSI reporting configuration information, the first set including P number of CSI-RS resources or SSB resources, where K, M, and P are positive integers.

In some embodiments, the method further includes:

sending third information to the terminal, wherein the third information is used to indicate one or more resources for measurement by the terminal;
wherein the third information includes or associates with a second set, and wherein the second set includes at least one resource among the K number of resources that is different from the M number of CSI-RS resources or SSB resources associated with the CSI reporting configuration information.

In some embodiments, the sending third information to the terminal includes:

sending the third information to the terminal after CSI reporting; or,
sending the third information to the terminal through first DCI or a first MAC CE.

In some embodiments, the CSI reporting configuration information is determined by the network device based on fourth information sent by the terminal; wherein the fourth information includes or associates with at least one of:

a number of measurement resources;
a periodicity of measurement resources;
frequency domain resource(s) occupied by measurement resources; or,
beam properties corresponding to measurement resources.

In some embodiments, the fourth information indicates information of measurement resources preferred or supported by the terminal.

In some embodiments, the method further includes:

sending fifth information to the terminal, wherein the fifth information is used to indicate one or more resources for measurement by the terminal,
wherein the fifth information includes or associates with the K number of resources.

In some embodiments, the sending fifth information to the terminal includes:

sending the fifth information to the terminal after CSI reporting; or,
sending the fifth information to the terminal through second DCI or a second MAC CE.

To implement the information transmission methods in the embodiments of the present disclosure, an embodiment of the present disclosure further provides an information transmission apparatus. FIG. 9 is a schematic structural diagram of an information transmission apparatus according to an embodiment of the present disclosure. As shown in FIG. 9, the apparatus includes:

a first sending module 91, configured to send first information to a network device,
wherein the first information includes or associates with at least one of:

a number of measurement resources;
a periodicity of measurement resources;
frequency domain resource(s) occupied by measurement resources; or,
beam properties corresponding to measurement resources.

In some embodiments, the first information is used for the network device to determine CSI reporting configuration information, or the first information is associated with CSI reporting configuration information received by the terminal;
and/or,
the first information indicates information of measurement resources preferred or supported by the terminal.
In some embodiments, the CSI reporting configuration information is associated with N number of CSI-RS resources or SSB resources, where N is a positive integer.
In some embodiments, attributes of the N number of CSI-RS resources or SSB resources associated with the CSI reporting configuration information are same or partially same to attributes of at least one of the number of measurement resources, the periodicity of measurement resources, the frequency domain resource(s) occupied by measurement resources, or, the beam properties corresponding to measurement resources included in the first information; or, attributes of the N number of CSI-RS resources or SSB resources associated with the CSI reporting configuration information are a specific value(s).
In some embodiments, the apparatus is further configured to:
receive the CSI reporting configuration information sent by the network device.
In some embodiments, the first sending module 91 is configured to:
send the first information to the network device through one of:

capability reporting information of the terminal;
one or more Physical Uplink Shared Channels (PUSCHs);
one or more Physical Uplink Control Channels (PUCCHs);
CSI reporting information; or,
one or more Medium Access Control (MAC) Control Elements (CEs).

In practical applications, the first sending module 91 may be implemented by a communication interface in the information transmission apparatus.
It should be noted that: when the information transmission apparatus provided in the above embodiments performs information transmission, illustration is made only by taking division of the above program modules as an example. In practical applications, the above processing may be allocated to different program modules for completion as needed, i.e., an internal structure of the apparatus is divided into different program modules, so as to complete all or part of the processing described above. In addition, the information transmission apparatus provided in the above embodiments and the embodiments of the information transmission methods belong to the same concept. For a detailed implementation process thereof, reference may be made to the method embodiments, and details are not described herein again.
To implement the information transmission methods in the embodiments of the present disclosure, an embodiment of the present disclosure further provides an information transmission apparatus. FIG. 10 is a schematic structural diagram of an information transmission apparatus according to an embodiment of the present disclosure. As shown in FIG. 10, the apparatus includes:

a first receiving module 101, configured to receive first information sent by a terminal,
wherein the first information includes or associates with at least one of:

a number of measurement resources;
a periodicity of measurement resources;
frequency domain resource(s) occupied by measurement resources; or,
beam properties corresponding to measurement resources.

In some embodiments, the first information is used for the network device to determine CSI reporting configuration information, or the first information is associated with CSI reporting configuration information received by the terminal;
and/or,
the first information indicates information of measurement resources preferred or supported by the terminal.

In some embodiments, the CSI reporting configuration information is associated with N number of CSI-RS resources or SSB resources, where N is a positive integer.

In some embodiments, attributes of the N number of CSI-RS resources or SSB resources associated with the CSI reporting configuration information are same or partially same to attributes of at least one of the number of measurement resources, the periodicity of measurement resources, the frequency domain resource(s) occupied by measurement resources, or, the beam properties corresponding to measurement resources included in the first information; or, attributes of the N number of CSI-RS resources or SSB resources associated with the CSI reporting configuration information are set to a specific value(s).

In some embodiments, the apparatus is further configured to:
send the CSI reporting configuration information to the terminal.

In some embodiments, the first receiving module 101 is configured to:
receive the first information sent by the terminal through one of:

capability reporting information of the terminal;
one or more Physical Uplink Shared Channels (PUSCHs);
one or more Physical Uplink Control Channels (PUCCHs);
CSI reporting information; or,
one or more Medium Access Control (MAC) Control Elements (CEs).

In practical applications, the first receiving module 101 may be implemented by a communication interface in the information transmission apparatus.

It should be noted that: when the information transmission apparatus provided in the above embodiments performs information transmission, illustration is made only by taking division of the above program modules as an example. In practical applications, the above processing may be allocated to different program modules for completion as needed, i.e., an internal structure of the apparatus is divided into different program modules, so as to complete all or part of the processing described above. In addition, the information transmission apparatus provided in the above embodiments and the embodiments of the information transmission methods belong to the same concept. For a detailed implementation process thereof, reference may be made to the method embodiments, and details are not described herein again.

To implement the information transmission methods in the embodiments of the present disclosure, an embodiment of the present disclosure further provides an information transmission apparatus. FIG. 11 is a schematic structural diagram of an information transmission apparatus according to an embodiment of the present disclosure. As shown in FIG. 11, the apparatus includes:
a second sending module 111, configured to send second information to a network device, wherein the second information includes or associates with indicators of K number of resources; the indicators of the K number of resources are determined by the terminal based on respective resources among M number of CSI-RS resources or SSB resources associated with CSI reporting configuration information, and the indicators of the K number of resources are associated with a first set associated with the CSI reporting configuration information, the first set including P number of CSI-RS resources or SSB resources, where K, M, and P are positive integers.

In some embodiments, the apparatus is further configured to:
receive third information sent by the network device, wherein the third information is used to indicate one or more resources for measurement by the terminal; wherein the third information includes or associates with a second set, and wherein the second set includes at least one resource among the K number of resources that is different from the M number of CSI-RS resources or SSB resources associated with the CSI reporting configuration information.

In some embodiments, the apparatus is further configured to:

receive the third information sent by the network device after CSI reporting; or,
trigger or activate reception of the third information through first DCI or a first MAC CE.

In some embodiments, the CSI reporting configuration information is determined by the network device based on fourth information sent by the terminal; wherein the fourth information includes or associates with at least one of:

a number of measurement resources;
a periodicity of measurement resources;
frequency domain resource(s) occupied by measurement resources; or,
beam properties corresponding to measurement resources.

In some embodiments, the fourth information indicates information of measurement resources preferred or supported by the terminal.
In some embodiments, the apparatus is further configured to:
receive fifth information sent by the network device, wherein the fifth information is used to indicate one or more resources for measurement by the terminal, wherein the fifth information includes or associates with the K number of resources.
In some embodiments, the apparatus is further configured to:

receive the fifth information sent by the network device after CSI reporting; or,
trigger or activate reception of the fifth information through second DCI or a second MAC CE.

In practical applications, the second sending module 111 may be implemented by a communication interface in the information transmission apparatus.
It should be noted that: when the information transmission apparatus provided in the above embodiments performs information transmission, illustration is made only by taking division of the above program modules as an example. In practical applications, the above processing may be allocated to different program modules for completion as needed, i.e., an internal structure of the apparatus is divided into different program modules, so as to complete all or part of the processing described above. In addition, the information transmission apparatus provided in the above embodiments and the embodiments of the information transmission methods belong to the same concept. For a detailed implementation process thereof, reference may be made to the method embodiments, and details are not described herein again.
To implement the information transmission methods in the embodiments of the present disclosure, an embodiment of the present disclosure further provides an information transmission apparatus. FIG. 12 is a schematic structural diagram of an information transmission apparatus according to an embodiment of the present disclosure. As shown in FIG. 12, the apparatus includes:

a second receiving module 121, configured to receive second information sent by the terminal,
wherein the second information includes or associates with indicators of K number of resources; the indicators of the K number of resources are determined by the terminal based on respective resources among M number of CSI-RS resources or SSB resources associated with CSI reporting configuration information, and the indicators of the K number of resources are associated with a first set associated with the CSI reporting configuration information, the first set including P number of CSI-RS resources or SSB resources, where K, M, and P are positive integers.

In some embodiments, the apparatus is further configured to:
send third information to the terminal, wherein the third information is used to indicate one or more resources for measurement by the terminal; wherein the third information includes or associates with a second set, and wherein the second set includes at least one resource among the K number of resources that is different from the M number of CSI-RS resources or SSB resources associated with the CSI reporting configuration information.
In some embodiments, the apparatus is further configured to:

send the third information to the terminal after CSI reporting; or,
send the third information to the terminal through first DCI or a first MAC CE.

In some embodiments, the CSI reporting configuration information is determined by the network device based on fourth information sent by the terminal; wherein the fourth information includes or associates with at least one of:

a number of measurement resources;
a periodicity of measurement resources;
frequency domain resource(s) occupied by measurement resources; or,
beam properties corresponding to measurement resources.

In some embodiments, the fourth information indicates information of measurement resources preferred or

supported by the terminal.

In some embodiments, the apparatus is further configured to:
send fifth information to the terminal, wherein the fifth information is used to indicate one or more resources for measurement by the terminal, wherein the fifth information includes or associates with the K number of resources.

In some embodiments, the apparatus is further configured to:

send the fifth information to the terminal after CSI reporting; or,
send the fifth information to the terminal through second DCI or a second MAC CE.

In practical applications, the second receiving module 121 may be implemented by a communication interface in the information transmission apparatus.

It should be noted that: when the information transmission apparatus provided in the above embodiments performs information transmission, illustration is made only by taking division of the above program modules as an example. In practical applications, the above processing may be allocated to different program modules for completion as needed, i.e., an internal structure of the apparatus is divided into different program modules, so as to complete all or part of the processing described above. In addition, the information transmission apparatus provided in the above embodiments and the embodiments of the information transmission methods belong to the same concept. For a detailed implementation process thereof, reference may be made to the method embodiments, and details are not described herein again.

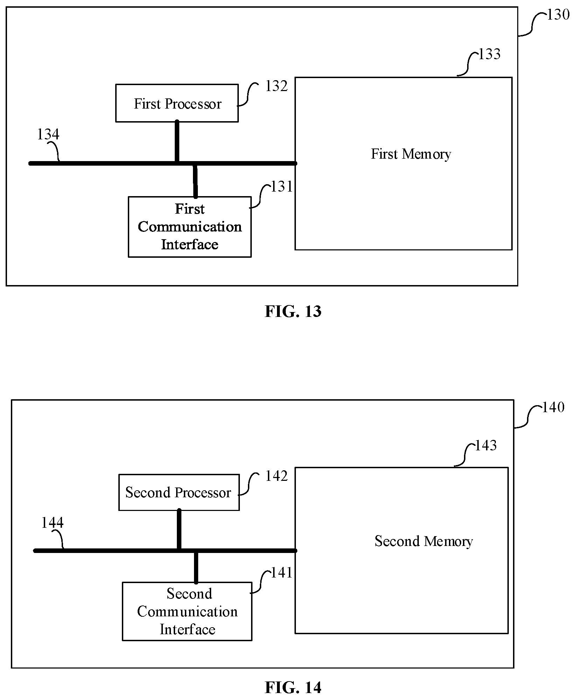

An embodiment of the present disclosure further provides a terminal. As shown in FIG. 13, the terminal includes:

a first communication interface 131, capable of performing information interaction with other terminals;
a first processor 132, connected to the first communication interface 131, configured to, when running a computer program, execute steps of the methods provided in one or more technical solutions on the terminal side described above, wherein the computer program is stored in a first memory 133.

It should be noted that: for a specific processing procedure of the first processor 132 and the first communication interface 131, reference may be made to the method embodiments, and details are not described herein again.

Certainly, in practical applications, various components in the terminal 130 are coupled together through a bus system 134. It can be understood that the bus system 134 is configured to implement connection and communication among these components. Besides a data bus, the bus system 134 further includes a power bus, a control bus, and a status signal bus. However, for clarity of illustration, various buses are all labeled as the bus system 134 in FIG. 13.

The first memory 133 in the embodiments of the present disclosure is configured to store various types of data to support operations of the terminal 130. Examples of these data include any computer program operating on the terminal 130.

The methods disclosed in the above embodiments of the present disclosure may be applied to the first processor 132, or implemented by the first processor 132. The first processor 132 may be an integrated circuit chip having signal processing capability. During an implementation process, various steps of the above methods may be completed through an integrated logic circuit of hardware or instructions in a software form in the first processor 132. The first processor 132 may be a general-purpose processor, a digital data processor (Digital Signal Processor, DSP), or other programmable logic devices, discrete gates or transistor logic devices, discrete hardware components, or the like. The first processor 132 can implement or execute various methods, steps, and logic block diagrams disclosed in the embodiments of the present disclosure. The general-purpose processor may be a microprocessor, any conventional processor, or the like. The steps of the methods disclosed in combination with the embodiments of the present disclosure may be directly embodied as being executed and completed by a hardware decoding processor, or executed and completed by a combination of hardware and software modules in a decoding processor. The software modules may be located in a storage medium, and the storage medium is located in the first memory 133. The first processor 132 reads information in the first memory 133 and completes the steps of the aforementioned methods in combination with hardware thereof.

An embodiment of the present disclosure further provides a network device. As shown in FIG. 14, the network device includes:

a second communication interface 141, capable of performing information interaction with other terminals;
a second processor 142, connected to the second communication interface 141, configured to, when running a computer program, execute steps of the methods provided in one or more technical solutions on the network-device side described above, wherein the computer program is stored in a second memory 143.

It should be noted that: for a specific processing procedure of the second processor 142 and the second communication interface 141, reference may be made to the method embodiments, and details are not described herein again.

Certainly, in practical applications, various components in the network device 140 are coupled together through a bus system 144. It can be understood that the bus system 144 is configured to implement connection and communication among these components. Besides a data bus, the bus system 144 further includes a power bus, a control bus, and a status signal bus. However, for clarity of illustration, various buses are all labeled as the bus system 144 in FIG. 14.

The second memory 143 in the embodiments of the present disclosure is configured to store various types of data to support operations of the network device 140. Examples of these data include any computer program operating on the network device 140.

The methods disclosed in the above embodiments of the present disclosure may be applied to the second processor 142, or implemented by the second processor 142. The second processor 142 may be an integrated circuit chip having signal processing capability. During an implementation process, various steps of the above methods may be completed through an integrated logic circuit of hardware or instructions in a software form in the second processor 142. The second processor 142 may be a general-purpose processor, a digital data processor (Digital Signal Processor, DSP), or other programmable logic devices, discrete gates or transistor logic devices, discrete hardware components, or the like. The second processor 142 can implement or execute various methods, steps, and logic block diagrams disclosed in the embodiments of the present disclosure. The general-purpose processor may be a microprocessor, any conventional processor, or the like. The steps of the methods disclosed in combination with the embodiments of the present disclosure may be directly embodied as being executed and completed by a hardware decoding processor, or executed and completed by a combination of hardware and software modules in a decoding processor. The software modules may be located in a storage medium, and the storage medium is located in the second memory 143. The second processor 142 reads information in the second memory 143 and completes the steps of the aforementioned methods in combination with hardware thereof.

In an exemplary embodiment, the terminal 130 and the network device 140 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components, to execute the aforementioned methods.

It can be understood that the memories (the first memory 133 and the second memory 143) in the embodiments of the present disclosure may be a volatile memory or a non-volatile memory, or may include both volatile and non-volatile memories. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, an optical disc, or a Compact Disc Read-Only Memory (CD-ROM). The magnetic surface memory may be a magnetic disk memory or a magnetic tape memory. The volatile memory may be a Random Access Memory (RAM) serving as an external cache. By way of illustrative but non-limiting explanation, many forms of RAM are available, for example, a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memories described in the embodiments of the present disclosure are intended to include, but are not limited to, these and any other suitable types of memories.

In an exemplary embodiment, an embodiment of the present disclosure further provides a storage medium, i.e., a computer storage medium, specifically a computer-readable storage medium. For example, the computer-readable storage medium includes a memory storing a computer program, and the computer program can be executed by the first processor 132 of the terminal 130 to complete steps of the aforementioned terminal-side methods. The computer-readable storage medium may be a memory such as a FRAM, a ROM, a PROM, an EPROM, an EEPROM, a Flash Memory, a magnetic surface memory, an optical disc, or a CD-ROM.

It should be noted that: terms "first", "second", and the like are configured to distinguish similar objects, and do not necessarily describe a specific sequence or order.

In addition, the technical solutions described in the embodiments of the present disclosure can be combined arbitrarily without conflict.

The above are only preferred embodiments of the present disclosure, and are not intended to limit the scope of protection of the present disclosure.

## Claims

**1.** An information transmission method, applied to a terminal, the method comprising:

sending first information to a network device,

wherein the first information comprises or associates with at least one of:

a number of measurement resources;
a periodicity of measurement resources;
frequency domain resource(s) occupied by measurement resources; or,
beam properties corresponding to measurement resources.

2. The method according to claim 1, wherein the first information is used for the network device to determine Channel State Information (CSI) reporting configuration information, or the first information is associated with CSI reporting configuration information received by the terminal; and/or,
the first information indicates information of measurement resources preferred or supported by the terminal.

3. The method according to claim 2, wherein the CSI reporting configuration information is associated with N number of Channel State Information Reference Signal (CSI-RS) resource(s) or Synchronization Signal/PBCH Block (SSB) resource(s), where N is a positive integer.

4. The method according to claim 3, wherein attributes of the N number of CSI-RS resource(s) or SSB resource(s) associated with the CSI reporting configuration information are same or partially same to attributes of at least one of the number of measurement resources, the periodicity of measurement resources, the frequency domain resource(s) occupied by measurement resources, or, the beam properties corresponding to measurement resources included in the first information; or,
attributes of the N number of CSI-RS resource(s) or SSB resource(s) associated with the CSI reporting configuration information are a specific value(s).

5. The method according to any one of claims 2 to 4, the method further comprising:
receiving the CSI reporting configuration information sent by the network device.

6. The method according to claim 1, wherein the first information is sent to the network device through one of:

capability reporting information of the terminal;
one or more Physical Uplink Shared Channels (PUSCHs);
one or more Physical Uplink Control Channels (PUCCHs);
CSI reporting information; or,
one or more Medium Access Control (MAC) Control Elements (CEs).

7. An information transmission method, applied to a network device, the method comprising:

receiving first information sent by a terminal,
wherein the first information comprises or associates with at least one of:

a number of measurement resources;
a periodicity of measurement resources;
frequency domain resource(s) occupied by measurement resources; or,
beam properties corresponding to measurement resources.

8. The method according to claim 7, wherein the first information is used for the network device to determine Channel State Information (CSI) reporting configuration information, or the first information is associated with CSI reporting configuration information received by the terminal; and/or,
the first information indicates information of measurement resources preferred or supported by the terminal.

9. The method according to claim 8, wherein the CSI reporting configuration information is associated with N number of Channel State Information Reference Signal (CSI-RS) resource(s) or Synchronization Signal/PBCH Block (SSB) resource(s), where N is a positive integer.

10. The method according to claim 9, wherein attributes of the N number of CSI-RS resource(s) or SSB resource(s) associated with the CSI reporting configuration information are same or partially same to attributes of at least one of the number of measurement resources, the periodicity of measurement resources, the frequency domain resource(s) occupied by measurement resources, or, the beam properties corresponding to measurement resources included in

the first information; or,
attributes of the N number of CSI-RS resource(s) or SSB resource(s) associated with the CSI reporting configuration information are set to a specific value(s).

**11.** The method according to claim 7, the method further comprising: sending the CSI reporting configuration information to the terminal.

**12.** The method according to claim 7, wherein the first information sent by the terminal is received through one of:

capability reporting information of the terminal;
one or more Physical Uplink Shared Channels (PUSCHs);
one or more Physical Uplink Control Channels (PUCCHs);
CSI reporting information; or,
one or more Medium Access Control (MAC) Control Elements (CEs).

**13.** An information transmission method, applied to a terminal, the method comprising:

sending second information to a network device,
wherein the second information comprises or associates with indicators of K number of resources; indicators of the K number of resources are determined by the terminal based on M number of Channel State Information Reference Signal (CSI-RS) resources or Synchronization Signal/PBCH Block (SSB) resources associated with Channel State Information (CSI) reporting configuration information, and the indicators of the K number of resources are associated with a first set associated with the CSI reporting configuration information, the first set comprising P number of CSI-RS resources or SSB resources, where K, M, and P are positive integers.

**14.** The method according to claim 13, the method further comprising:

receiving third information sent by the network device, wherein the third information is used to indicate one or more resources for measurement by the terminal;
wherein the third information comprises or associates with a second set, and wherein the second set comprises at least one resource among the K number of resources that is different from the M number of CSI-RS resources or SSB resources associated with the CSI reporting configuration information.

**15.** The method according to claim 14, wherein the receiving third information sent by the network device comprises:

receiving the third information sent by the network device after CSI reporting; or,
triggering or activating reception of the third information through first Downlink Control Information (DCI) or a first MAC CE.

**16.** The method according to claim 13 or 14, wherein

the CSI reporting configuration information is determined by the network device based on fourth information sent by the terminal;
wherein the fourth information comprises or associates with at least one of:

a number of measurement resources;
a periodicity of measurement resources;
frequency domain resource(s) occupied by measurement resources; or,
beam properties corresponding to measurement resources.

**17.** The method according to claim 16, wherein the fourth information indicates information of measurement resources preferred or supported by the terminal.

**18.** The method according to claim 13, the method further comprising:

receiving fifth information sent by the network device, wherein the fifth information is used to indicate one or more resources for measurement by the terminal,
wherein the fifth information comprises or associates with the K number of resources.

**19.** The method according to claim 18, wherein the receiving fifth information sent by the network device comprises:

receiving the fifth information sent by the network device after CSI reporting; or,
triggering or activating reception of the fifth information through second DCI or a second MAC CE.

**20.** An information transmission method, applied to a network device, the method comprising:

receiving second information sent by the terminal,
wherein the second information comprises or associates with indicators of K number of resources; the indicators of the K number of resources are determined by the terminal based on M number of Channel State Information Reference Signal (CSI-RS) resources or Synchronization Signal/PBCH Block (SSB) resources associated with Channel State Information (CSI) reporting configuration information, and the indicators of the K number of resources are associated with a first set associated with the CSI reporting configuration information, the first set comprising P number of CSI-RS resources or SSB resources, where K, M, and P are positive integers.

**21.** The method according to claim 20, the method further comprising:

sending third information to the terminal, wherein the third information is used to indicate one or more resources for measurement by the terminal,
wherein the third information comprises or associates with a second set, and wherein the second set comprises at least one resource among the K number of resources that is different from the M number of CSI-RS resources or SSB resources associated with the CSI reporting configuration information.

**22.** The method according to claim 21, wherein the sending third information to the terminal comprises:

sending the third information to the terminal after CSI reporting; or,
sending the third information to the terminal through first Downlink Control Information (DCI) or a first MAC CE.

**23.** The method according to claim 20 or 21, wherein

the CSI reporting configuration information is determined by the network device based on fourth information sent by the terminal;
wherein the fourth information comprises or associates with at least one of:

a number of measurement resources;
a periodicity of measurement resources;
frequency domain resource(s) occupied by measurement resources; or,
beam properties corresponding to measurement resources.

**24.** The method according to claim 23, wherein the fourth information indicates information of measurement resources preferred or supported by the terminal.

**25.** The method according to claim 20, the method further comprising:

sending fifth information to the terminal, wherein the fifth information is used to indicate one or more resources for measurement by the terminal,
wherein the fifth information comprises or associates with the K number of resources.

**26.** The method according to claim 25, wherein the sending fifth information to the terminal comprises:

sending the fifth information to the terminal after CSI reporting; or,
sending the fifth information to the terminal through second DCI or a second MAC CE.

**27.** An information transmission apparatus, comprising:

a first sending module, configured to send first information to a network device,
wherein the first information comprises or associates with at least one of:

a number of measurement resources;
a periodicity of measurement resources;
frequency domain resource(s) occupied by measurement resources; or,
beam properties corresponding to measurement resources.

**28.** An information transmission apparatus, comprising:

a first receiving module, configured to receive first information sent by a terminal,
wherein the first information comprises or associates with at least one of:

a number of measurement resources;
a periodicity of measurement resources;
frequency domain resource(s) occupied by measurement resources; or,
beam properties corresponding to measurement resources.

**29.** An information transmission apparatus, comprising:

a second sending module, configured to send second information to a network device,
wherein the second information comprises or associates with indicators of K number of resources; indicators of the K number of resources are determined by the terminal based on M number of Channel State Information Reference Signal (CSI-RS) resources or Synchronization Signal/PBCH Block (SSB) resources associated with Channel State Information (CSI) reporting configuration information, and the indicators of the K number of resources are associated with a first set associated with the CSI reporting configuration information, the first set comprising P number of CSI-RS resources or SSB resources, where K, M, and P are positive integers.

**30.** An information transmission apparatus, comprising:

a second receiving module, configured to receive second information sent by the terminal,
wherein the second information comprises or associates with indicators of K number of resources; the indicators of the K number of resources are determined by the terminal based on M number of Channel State Information Reference Signal (CSI-RS) resources or Synchronization Signal/PBCH Block (SSB) resources associated with Channel State Information (CSI) reporting configuration information, and the indicators of the K number of resources are associated with a first set associated with the CSI reporting configuration information, the first set comprising P number of CSI-RS resources or SSB resources, where K, M, and P are positive integers.

**31.** A terminal, comprising a processor and a memory for storing a computer program capable of running on the processor, wherein the processor, when running the computer program thereon, is configured to execute steps of the method according to any one of claims 1 to 6, or execute steps of the method according to any one of claims 13 to 19.

**32.** A network device, comprising a processor and a memory for storing a computer program capable of running on the processor,
wherein the processor, when running the computer program thereon, is configured to execute steps of the method according to any one of claims 7 to 12, or execute steps of the method according to any one of claims 20 to 26.

**33.** A computer-readable storage medium having a computer program stored thereon, wherein the computer program, when executed by a processor, implements steps of the method according to any one of claims 1 to 6, or implements steps of the method according to any one of claims 7 to 12, or implements steps of the method according to any one of claims 13 to 19, or implements steps of the method according to any one of claims 20 to 26.

RX beam1
RX beam2
RX beam3
RX beam4
...
20ms

FIG. 1

RSRPs of Beam Pairs (Set B)
AI model
Beam Pairs (Set A)

FIG. 2

RX beam1
RX beam4
...
64RS
...
Measuring 64×4 number of Beam Pairs
10S

FIG. 3

RX
beam1
RX
beam4
...
8RS
...
80ms
Measuring 8×4 number of Beam Pairs, and Predicting quality of 64×4 number of Beam Pairs

FIG. 4

sending first information to a network device, wherein the first information comprises or associates with at least one of: a number of measurement resources; a periodicity of measurement resources; frequency domain resource(s) occupied by measurement resources; or, beam properties corresponding to measurement resources

501

FIG. 5

receiving first information sent by a terminal, wherein the first information comprises or associates with at least one of: a number of measurement resources; a periodicity of measurement resources; frequency domain resource(s) occupied by measurement resources; or, beam properties corresponding to measurement resources

601

FIG. 6

sending second information to a network device, wherein the second information comprises or associates with indicators of K number of resources; indicators of the K number of resources are determined by the terminal based on M number of CSI-RS resources or SSB resources associated with CSI reporting configuration information, and the indicators of the K number of resources are associated with a first set associated with the CSI reporting configuration information

701

FIG. 7

receiving second information sent by the terminal, wherein the second information comprises or associates with indicators of K number of resources; the indicators of the K number of resources are determined by the terminal based on M number of CSI-RS resources or SSB resources associated with CSI reporting configuration information, and the indicators of the K number of resources are associated with a first set associated with the CSI reporting configuration information

801

**FIG. 8**

Information Transmission Apparatus
First Sending Module
91

**FIG. 9**

Information Transmission Apparatus
First Receiving Module
101

**FIG. 10**

Information Transmission Apparatus
Second Sending Module
111

**FIG. 11**

Information Transmission Apparatus
Second Receiving Module
121

**FIG. 12**

130
133
132
First Processor
134
First Memory
131
First Communication Interface

FIG. 13

140
143
142
Second Processor
144
Second Memory
141
Second Communication Interface

FIG. 14

**INTERNATIONAL SEARCH REPORT**

International application No. **PCT/CN2024/143642**

**A. CLASSIFICATION OF SUBJECT MATTER**

H04W 72/044(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, DWPI, ENTXT: 报告, 发送, 配置, 确定, 上报, 信息, 支持, 终端, 资源, AI, BEAM?, CSI, Determin+, Information, ML, pair, RS, set, Terminal, ue, Configurat+, Report?

**C. DOCUMENTS CONSIDERED TO BE RELEVANT**

| Category* | Citation of document, with indication, where appropriate, of the relevant passages | Relevant to claim No. |
|---|---|---|
| X | CN 112583551 A (DATANG MOBILE COMMUNICATIONS EQUIPMENT CO., LTD.) 30 March 2021 (2021-03-30)<br>description, paragraphs [0049]-[0128] | 1-33 |
| A | WO 2022082713 A1 (QUALCOMM INC.) 28 April 2022 (2022-04-28)<br>entire document | 1-33 |
| A | CN 111769857 A (HUAWEI TECHNOLOGIES CO., LTD.) 13 October 2020 (2020-10-13)<br>entire document | 1-33 |
| A | CN 115696307 A (HUAWEI TECHNOLOGIES CO., LTD.) 03 February 2023 (2023-02-03)<br>entire document | 1-33 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 April 2025** | **18 April 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/143642**

| Patent document cited in search report | | | Publication date (day/month/year) | Patent family member(s) | | | Publication date (day/month/year) |
|---|---|---|---|---|---|---|---|
| CN | 112583551 | A | 30 March 2021 | WO | 2021057121 | A1 | 01 April 2021 |
| WO | 2022082713 | A1 | 28 April 2022 | US | 2023361832 | A1 | 09 November 2023 |
| | | | | EP | 4233245 | A1 | 30 August 2023 |
| | | | | IN | 202327015780 | A | 14 April 2023 |
| | | | | CN | 116325538A | A | 23 June 2023 |
| CN | 111769857 | A | 13 October 2020 | WO | 2020200059 | A1 | 08 October 2020 |
| | | | | KR | 20210142724 | A | 25 November 2021 |
| | | | | EP | 3937391 | A1 | 12 January 2022 |
| | | | | US | 2022022193 | A1 | 20 January 2022 |
| | | | | IN | 202137049736 | A | 11 March 2022 |
| | | | | JP | 2022528402 | A | 10 June 2022 |
| | | | | CN | 114928386 | A | 19 August 2022 |
| | | | | KR | 20240099513 | A | 28 June 2024 |
| | | | | US | 2025039914 | A1 | 30 January 2025 |
| CN | 115696307 | A | 03 February 2023 | WO | 2023005904 | A1 | 02 February 2023 |
| | | | | EP | 4369774 | A1 | 15 May 2024 |
| | | | | US | 2024163855 | A1 | 16 May 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202410028950